(19) Europäisches Patentamt
European Patent Office
Office européen des brevets

(11) Veröffentlichungsnummer: **0 019 830**
**B1**

# (12) EUROPÄISCHE PATENTSCHRIFT

(45) Veröffentlichungstag der Patentschrift: **29.06.83**

(51) Int. Cl.³: **C 08 F 222/22**, C 08 F 222/38, C 08 F 246/00, C 08 L 101/00 // (C08F246/00, 222/22, 222/38), (C08L101/00, 35/00, 35/02)

(21) Anmeldenummer: **80102775.6**

(22) Anmeldetag: **20.05.80**

## (54) Copolymere substituierter Piperidine, ihre Herstellung und Verwendung.

(30) Priorität: **23.05.79 DE 2920918**

(43) Veröffentlichungstag der Anmeldung: **10.12.80 Patentblatt 80/25**

(45) Bekanntmachung des Hinweises auf die Patenterteilung: **29.06.83 Patentblatt 83/26**

(84) Benannte Vertragsstaaten: **AT BE CH DE FR GB IT LI NL**

(56) Entgegenhaltungen:
**DE-A-2 621 870**
**DE-A-2 748 362**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt/Main 80 (DE)**

(72) Erfinder: **Wiezer, Hartmut, Dr., Hans-Fischer-Strasse 6, D-8906 Gersthofen (DE)**
Erfinder: **Pfahler, Gerhard, Dr., Karlsbader Strasse 27, D-8900 Augsburg (DE)**
Erfinder: **Mayer, Norbert, Dr., Ziegelgrundweg 17, D-8901 Gablingen (DE)**

**EP 0 019 830 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Copolymere substituierter Piperidine, ihre Herstellung und Verwendung

Die Erfindung betrifft neue Polymerisate aus durch eine polymerisierbare Gruppe substituierten Polyalkylpiperidinen und olefinischen Verbindungen, ein Verfahren zu ihrer Herstellung und ihre Verwendung als Lichtschutzmittel für synthetische Polymere.

Copolymerisate von 4-(Meth)-acryloyloxy-2,2,6,6-tetramethylpiperidinverbindungen mit ethylenischen Monomeren sowie Additions- und Kondensationspolymere, welche Polyalkylpiperidingruppen enthalten, sind bereits bekannt (DE-OS 2748362 bzw. DE-OS 2719171). Sie sind als Lichtschutzmittel für Kunststoffe wirksam, haben jedoch bisher auf dem Markt keine Bedeutung erlangt. Von den Piperidinstabilisatoren wird in grösserem Masse lediglich eine relativ niedrig molekulare Verbindung, nämlich das Bis-(2,2,6,6-tetramethyl-4-piperidyl)-sebacat, verwendet (DE-PS 1929928, DE-OS 2204659).

Nachteilig an allen diesen bisher bekannten Stabilisatoren ist, dass sie nicht in sämtlichen anwendungstechnisch relevanten Parametern, wie z.B. der Flüchtigkeit, der Migrationsfestigkeit bzw. der Auswaschbarkeit und der Verträglichkeit mit den zu stabilisierenden Polymeren, den technischen Anforderungen genügen. Eine zu hohe Flüchtigkeit führt beispielsweise bei den hohen Verarbeitungstemperaturen von 200 bis 300°C zu erheblichen und unerwünschten Stabilisatorverlusten. Im Falle schlechter Verträglichkeit kann der Stabilisator an die Polymeroberfläche wandern, und zwar unter Bildung mechanisch leicht abreibbarer Beläge. Eine unzureichende Migrationsfestigkeit macht sich schliesslich beim Benetzen der stabilisierten Polymeren mit Lösungsmitteln bemerkbar, wobei im Allwettereinsatz besonders dem Wasser eine erhebliche eluierende Bedeutung zukommt. In diesem Zusammenhang bedingt die leichte Auswaschbarkeit mit Wasser eine schnelle Abnahme der Stabilisatorwirksamkeit [s.a. J. Durwins et al, Europ. Polym. J. 11 (1975) 219; R.W. Kuchkuda Plastic Engineering 1977 (Juni), 32].

Es wurde gefunden, dass bisher nicht bekannte Copolymerisate aus Polyalkylpiperidinen, die durch eine polymerisierbare Gruppe substituiert sind, und bestimmten olefinischen Verbindungen diese Nachteile überraschenderweise nicht besitzen.

Die neuen Polymerisate sind Copolymere aus einem oder mehreren Polyalkylpiperidinen der allgemeinen Formel (I),

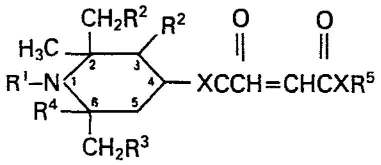
(I)

und einem oder mehreren Comonomeren der allgemeinen Formel (II),

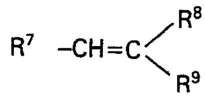
(II)

mit Molekulargewichten von 1000 bis 10000, wobei das Verhältnis Monomere I zu Monomere II 1:1 beträgt und wobei in den 30 Monomeren der Formel (I)

$R^1$ Wasserstoff oder $C_1$– bis $C_{18}$–Alkyl, vorzugsweise Wasserstoff oder $C_1$– bis $C_4$–Alkyl und insbesondere Wasserstoff ist,

$R^2$ und $R^3$ entweder gleich sind und Wasserstoff oder eine $C_1$– bis $C_5$–Alkylgruppe, vorzugsweise Wasserstoff oder eine Methylgruppe und insbesondere Wasserstoff bedeuten, und dann

$R^4$ für eine Methylgruppe steht, oder

$R^2$ Wasserstoff oder $C_1$– bis $C_5$-Alkyl ist und dann

$R^3$ und $R^4$ zusammen mit den Kohlenstoffatomen, an die sie gebunden sind, eine $C_5$– oder $C_6$-Cycloalkylgruppe oder eine Gruppe der Formel (III)

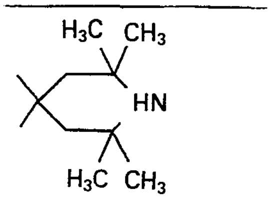
(III)

darstellen,

$R^5$ Wasserstoff, $C_1$– bis $C_{18}$–Alkyl oder eine Gruppe der Formel (IV)

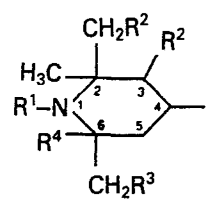
(IV)

ist, in welcher $R^1$, $R^2$, $R^3$ und $R^4$ die oben angegebenen Bedeutungen haben, jedoch vorzugsweise Wasserstoff oder $C_1$– bis $C_{12}$–Alkyl oder eine Gruppe der Formel (IV) und insbesondere Wasserstoff, $C_1$– bis $C_6$–Alkyl oder eine Gruppe der Formel (IV) sind,

X insbesondere für Sauerstoff steht oder auch für einen Rest $-NR^6$, wobei $R^6$ Wasserstoff, $C_1$– bis $C_{18}$–Alkyl oder eine Gruppe der Formel (IV), vorzugsweise Wasserstoff oder $C_1$– bis $C_{18}$–Alkyl ist,

während in den Monaten der Formel (II)

$R^7$ Wasserstoff oder eine Gruppe der Formel $COOR^{10}$ mit $R^{10}$ = $C_1$– bis $C_{18}$–Alkyl, vorzugsweise jedoch Wasserstoff ist,

$R^8$ ein Wasserstoffatom oder eine Methylgruppe, vorzugsweise Wasserstoff bedeutet und

$R^9$ für Wasserstoff oder für $C_1$– bis $C_{36}$–Alkyl, vorzugsweise Wasserstoff oder $C_1$– bis $C_{18}$–Alkyl und insbesondere Wasserstoff, oder für Phenyl oder für Chlor, oder für Acetyl, oder für eine Gruppe der Formel $-OR^{11}$

mit $R^{11}$ = Wasserstoff oder $C_1$– bis $C_{18}$–Alkyl, oder für eine Gruppe der Formel $-COOR^{12}$ mit $R^{12}$ = Alkyl oder Hydroxyalkyl mit 1 bis 18 C-Atomen oder ein Rest der Formel (IV), vorzugsweise eine Alkyl- oder Hydroxyalkylgruppe mit 1 bis 6 C-Atomen oder ein Rest der Formel (IV) steht.

Dass die erfindungsgemässen Copolymerisate in ihrem Eigenschaftsbild als Stabilisatoren frei von den Nachteilen sein würden, die die Polymeren und monomeren Stabilisatoren der DE-OSS 1929928, 2204659, 2719171 und 2748362 aufweisen, war nicht zu erwarten, da sie in Teilen ihrer Struktur diesen sehr ähnlich sind. Ganz im Widerspruch zu dieser Vermutung sind die neuen piperidingruppenhaltigen Copolymerisate jedoch nicht nur in hervorragender Weise zum Stabilisieren von organischen Polymeren gegen den Abbau durch Licht und Wärme geeignet, sondern zeichnen sich obendrein durch geringe Flüchtigkeit, sehr gute Migrationsfestigkeit und trotz des polymeren Charakters überraschend gute Verträglichkeit mit den zu stabilisierenden Polymeren aus.

Die Herstellung der neuen Copolymerisate erfolgt nach grundsätzlich bekannten Verfahren, wie sie für die Copolymerisation von Ethylen (siehe Houben/Weyl Bd. 14/1, S. 620) oder anderen Comonomeren (siehe Houben/Weyl Bd. 14/1, S. 188, 487, 813–815, 918, 972) angewendet werden.

Monomere der Formel (I) sind z.B. aus den DE-OSS 1929928, 2204659, 2258752, 2623422, 2621870 bekannt und entsprechend den dort gemachten Angaben zugänglich. Genannt seien beispielsweise:

Bis-(2,2,6,6-tetramethyl-4-piperidyl)-fumarat
Fumarsäure-1'-(2,2,6,6-tetramethyl-4-piperidyl)-4'-methylester
Fumarsäure-1'-(2,2,6,6-tetramethyl-4-piperidyl)-4'-ethylester
Fumarsäure-1'-(2,2,6,6-tetramethyl-4-piperidyl)-4'-hexylester
Bis-(2,2,6,6-tetramethyl-4-piperidyl)-maleinat
Maleinsäure-1'-(2,2,6,6-tetramethyl-4-piperidyl)-4'-methylester
Maleinsäure-1'-(2,2,6,6-tetramethyl-4-piperidyl)-4'-ethylester
Maleinsäure-1'-(2,2,6,6-tetramethyl-4-piperidyl)-4'-hexylester

Comonomere der Formel (II) sind z.B.
Ethylen, Styrol, Vinylacetat, Acrylate und Methacrylate.

Bei der Copolymerisation setzt man die Monomeren in mindestens äquimolaren Mengen ein, das Monomerenverhältnis kann aber auch in einem gewissen Bereich schwanken, jedoch sind im allgemeinen aufgrund bekannter Copolymerisationsparameter von vornherein 1:1-Copolymere zu erwarten (siehe Houben/Weyl Bd. 14, S. 101 ff). Der Polymerisationsgrad ist durch die Menge des verwendeten Polymerisationskatalysators in gewissen Grenzen beeinflussbar: Je höher die Katalysatormenge ist, um so niedriger ist der erreichbare Polymerisationsgrad.

So besitzen die erfindungsgemässen Copolymerisate Molekulargewichte von ca. 1000 bis ca. 10000, vorzugsweise von ca. 1000 bis ca. 6000 und insbesondere von ca. 1500 bis ca. 6000. Der Piperidinringstickstoffgehalt beträgt in Abhängigkeit von den der Copolymerisation unterworfenen Verbindungen (I) und der Art und der Menge der Comonomeren (II) 0,5 bis 6,6, vorzugsweise 1 bis 6,0 und insbesondere 1,0 bis 4,0%.

Bei der Durchführung des Polymerisationsverfahrens wird im einzelnen und bevorzugt so vorgegangen, dass das Monomere oder ein Monomerengemisch der Formel (I) in einem organischen Lösungsmittel, wie z.B. Benzol, Toluol, Xylol, iso-Octan, Cyclohexan, tert.-Butanol, Ethylacetat, Butylacetat oder auch Wasser zusammen mit 0,01 bis 15, vorzugsweise 2 bis 15 Gewichtsprozent, bezogen auf Gesamtmonomere, eines ionischen Starters (Alkalimetallamid) oder eines üblichen Radikalstarters (Azoverbindungen, peroxidische Verbindungen), vorzugsweise letzteren, insbesondere aber α,α'-Azobisisobutyronitril, unter Zusatz von 0 bis 6 Gew.-% eines Emulgators, bezogen auf Gesamtmonomere (z.B. Na-Octadecylsulfat, Na-Laurylsulfat), vorlegt, das Comonomere oder ein Comonomerengemisch der Formel (II) zufügt und die Reaktion bei einer Temperatur von 50 bis 180, vorzugsweise 70 bis 150 und insbesondere 80 bis 120°C ablaufen lässt. Bei gasförmigen Comonomeren (II) wird in einem Druckgefäss mit Rührer polymerisiert, wobei ein Druck von 20 bis 300, vorzugsweise von 50 bis 250 und insbesondere von 50 bis 150 bar eingestellt wird.

Die Reaktionszeit beträgt im allgemeinen 2 bis 20 Stunden. Die sich aus dem Reaktionsgemisch abscheidenden Polymerisate werden durch Filtration isoliert. Gelartig anfallende Polymerisate lassen sich durch Abdestillieren des Lösungsmittels gewinnen und können durch Umfällen gereinigt werden.

Eine weitere Herstellungsmöglichkeit für die erfindungsgemässen Produkte besteht darin, zunächst Copolymerisate aus niedrigen Alkylestern der Fumarsäure oder der Maleinsäure oder aus Maleinsäureanhydrid und Verbindungen der Formel (II) herzustellen und diese dann mit Polyalkylpiperidinverbindungen der allgemeinen Formel (VI)

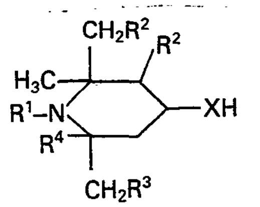 (VI)

umzusetzen. Diese Umsetzung wird beim Einsatz von Maleinsäureanhydridcopolymerisaten durch Erhitzen in einem inerten organischen Lösungsmittel auf 50 bis 150°C durchgeführt, während man beim Einsatz von Fumar- und Maleinsäureestercopolymerisaten in inerten organischen Lösungsmitteln mit Siedepunkten zwischen 80 und 250°C, insbesondere zwischen 100 und 150°C, wie z.B. (cyclo)-aliphatischen oder aromatischen Kohlenwasserstoffen (Benzinschnitte, Toluol, Xylol, Mesithylen etc.) unter Zusatz von 0,1 bis 10 Gew.-

% basischer Umesterungskatalysatoren, wie z.B. Alkalimetallalkoholaten und Alkalimetallamiden arbeitet. Der Reaktionsalkohol wird kontinuierlich durch Kolonnendestillation aus dem Reaktionsgemisch entfernt. Gleichzeitiges Durchleiten von Stickstoff begünstigt diese Entfernung.

Sollen nach diesem Verfahren solche Polymerisate hergestellt werden, bei denen rein formal ein Monomeres (I) mit $-XR^5 = -O-C_1-$ bis $C_{18}$-Alkyl bzw. $-N-C_1-$ bis $C_{18}$-Alkyl beteiligt ist, so fügt man bei der Umsetzung des Copolymerisats mit der Polyalkylpiperidinverbindung (VI) den entsprechenden Alkohol bzw. das entsprechende Amin in der äquimolaren Menge, bezogen auf Polyalkylpiperidinverbindung, zu.

Die neuen Copolymerisate sind, wie schon erwähnt, als Lichtstabilisatoren für synthetische Polymere in hervorragender Weise geeignet. Besonders wertvoll sind die, in denen X = Sauerstoff ist und $R^5$ die Bedeutung eines Restes der Formel (IV) hat.

Unter synthetischen Polymeren werden in diesem Zusammenhang verstanden:

Halogenfreie und halogenhaltige Homo- und Copolymere, im einzelnen Homopolymerisate von $C_1$- bis $C_4$-α-Olefinen, von Dienen und von Styrol, wie z.B. Polyethylen niedriger und hoher Dichte, Polypropylen, Polystyrol, Polybutadien und Polyisopren, Copolymere von Olefinen, Dienen und Styrol miteinander oder mit anderen olefinisch ungesättigten Monomeren, wie Ethylen-Propylen-Copolymere, Ethylen-Buten-Copolymere, Styrol-Butadien-Copolymere, Ethylen-Vinylacetat-Copolymere und Acrylnitril-Butadien-Styrol-Copolymere, Homopolymere von Vinylchlorid und Vinylidenchlorid und Copolymere dieser Monomeren untereinander und mit anderen olefinisch ungesättigten Monomeren. Des weiteren sollen auch Polyurethane, Polyacetale, Polyester, Polyamide, Polyacrylate und Epoxyharze eingeschlossen sein.

Bevorzugt sind Poly-α-Olefine wie Polyethylene und Polypropylene, Polyester, Polystyrol und Polyacrylat.

Die neuen Stabilisatoren werden nach allgemein üblichen Methoden in die Polymermassen eingearbeitet. Alternativ kann man eine Lösung, Suspension oder Emulsion des Stabilisators mit dem Polymeren direkt oder mit einer Lösung, Suspension oder Emulsion desselben vermischen und das Lösungsmittel anschliessend entfernen. Die Stabilisatoren sind für sich allein oder im Gemisch mit einem oder mehreren der bei der Kunststoffverarbeitung üblichen Stabilisatoren, wie z.B. Antioxidantien, auf Phenol- und Sulfidbasis, UV-Absorbern und Lichtschutzmitteln, Phospitstabilisatoren, Metallverbindungen, Epoxystabilisatoren und mehrwertigen Alkoholen einsetzbar. In den zu stabilisierenden Kunststoffmassen können ferner Flammschutzmittel und Pigmente, Farbstoffe, Antistatika und Füllstoffe, wie z.B. Glasfasern, anwesend sein.

Beispiele für geeignete Antioxidantien sind solche vom Typ der sterisch gehinderten Phenole wie 2,6-Di-tert.-butyl-p-kresol, 2,6-Di-octadecyl-p-kresol, 4,4'-Butyliden-bis-(2,6-di-tert.-butyl-phenol), 4,4'-Thio-bis-(2-tert.-butyl-5-methylphenol), phenolische Triazinverbindungen, Thiodipropionsäureester von Fettalkoholen, Dioctadecylsulfid und -disulfid.

Zu den UV-Absorbern und Lichtschutzmitteln gehören z.B. 2-(2'-Hydroxyphenyl)-benztriazole wie 2-(2'-Hydroxy-5'-methyl-phenyl)-benztriazol, 2-Hydroxybenzophenone wie 2-Hydroxy-4-octoxy-benzophenon, Stabilisatoren aus der Gruppe der Salizylate wie Octylphenylsalizylat, Nickelchelate, Oxalsäurediamide und sterisch gehinderte Piperidinverbindungen.

Als Phospite sind Trisnonylphenylphosphit, Trislaurylphosphit oder auch Ester des Pentaerythritphosphits zu nennen.

Unter als Stabilisatoren bekannten Metallverbindungen werden in diesem Zusammenhang verstanden: Calcium-, Barium-, Strontium-, Zink-, Cadmium-, Magnesium-, Aluminium- und Bleiseifen aliphatischer Carbonsäuren oder Oxycarbonsäuren mit etwa 12 bis 32 C-Atomen, Salze der genannten Metalle mit aromatischen Carbonsäuren wie Benzoate oder Salizylate sowie (Alkyl)-Phenolate dieser Metalle, ferner Organozinnverbindungen, wie z.B. Dialkylzinnthioglykolate und Carboxylate.

Bekannte Epoxystabilisatoren sind z.B. epoxidierte höhere Fettsäuren wie epoxidiertes Sojabohnenöl, Tallöl, Leinöl oder epoxidiertes Butyloleat sowie Epoxide langkettiger Olefine.

Mehrwertige Alkohole können beispielsweise Pentaerythrit, Trimethylolpropan, Sorbit oder Mannit sein, d.h. bevorzugt Alkohole mit 5 oder 6 C-Atomen und 3 bis 6 OH-Gruppen.

Eine Stabilisatorkombination für Poly-α-Olefine, wie z.B. Hoch-, Mittel- und Niederdruckpolymerisate von $C_2$– bis $C_4$-α-Olefinen, insbesondere Polyethylen und Polypropylen oder von Copolymerisaten derartiger α-Olefine besteht, bezogen auf 100 Gewichtsteile Polymer, beispielsweise aus 0,01 bis 5 Gewichtsteilen einer der erfindungsgemäss zu verwendenden Verbindungen, 0,05 bis 5 Gewichtsteilen eines phenolischen Stabilisators, gegebenenfalls 0,01 bis 5 Gewichtsteilen eines schwefelhaltigen Costabilisators sowie gegebenenfalls 0,01 bis 3 Gewichtsteilen einer basischen oder neutralen Metallseife, wie z.B. Calciumstearat oder Zinkstearat sowie gegebenenfalls 0,1 bis 5 Gewichtsteilen eines Phosphits und gegebenenfalls 0,01 bis 5 Gewichtsteilen eines bekannten UV-Stabilisators aus der Gruppe der Alkoxyhydroxybenzophenone, 4-Hydroxyphenylbenzotriazole, Benzylidenmalonsäuremononitrilester oder der sog. Quencher, wie z.B. Nickelchelate.

Die folgenden Beispiele dienen der näheren Erläuterung der Erfindung.

Beispiel 1

In einem 2-l-Stahlautoklaven mit Magnethubrührwerk wurden 50 g Bis-(2,2,6,6-tetramethyl-4-piperidyl)-fumarat, 500 ml Isooctan und 2 g α,α'-Azobisisobutyronitril vorgelegt. Sodann wurden 50 bar Ethylen aufgedrückt, worauf man 5 Stunden auf 90°C erhitzte, wobei sich ein Enddruck von 85 bar einstellte. Anschliessend wurde heiss filtriert, in 500 ml Essigester eingerührt und der sich hierbei abscheidende Feststoff abgenutscht.

Es wurden 78 g eines Bis-(2,2,6,6-tetramethyl-4-piperidyl)-fumarat-Ethylen-Copolymerisates vom Fp. 105°C mit einem Molgewicht von 4990 erhalten.

Analyse: C = 77,0% H = 12,5% N = 3,5%

Beispiel 2

Analog Beispiel 1 wurden 42 g Bis-(2,2,6,6-tetramethyl-4-piperidyl)-fumarat, 500 ml Butylacetat und 4 g $\alpha,\alpha'$-Azobisisobutyronitril (AIBN) vorgelegt. Man drückte 50 bar Ethylen auf und copolymerisierte 7 Stunden bei 90° C, wonach der Enddruck 68 bar betrug. Anschliessend wurde heiss filtriert und nach dem Abkühlen der ausgefallene Feststoff abgenutscht.

Ausbeute: 109 g Fp., 107°C, Molgewicht: 2170

Analyse: C = 78,1%, H = 13,0%, N = 2,8%

Beispiel 3

39,4 g Bis-(2,2,6,6-tetramethyl-4-piperidyl)-fumarat, 500 ml Butylacetat und 4 g AIBN wurden in einem Stahlautoklaven vorgelegt. Man drückte 50 bar Ethylen auf und erhitzte 6 Stunden auf 120°C. Dabei stellte sich ein Enddruck von 90 bar ein. Anschliessend wurde zur Trockene einrotiert, wobei ein Feststoff zurückblieb. 100g, Fp. 100 bis 107°C, Molgewicht: 1430.

Analyse: C = 77,3%, H = 12,9%, N = 3,0%

Beispiel 4

Es wurde analog Beispiel 3 gearbeitet mit Bis-(2,2,6,6-tetramethyl-4-piperidyl)-maleinat, wobei sich ein Enddruck von 85 bar einstellte. Man erhielt 96 g eines Bis-(2,2,6,6-tetramethyl-4-piperidyl)-maleinat-Ethylen-Copolymerisates vom Fp. 100 bis 105°C. Molgewicht: 1140

Analyse: C = 77,9%, H = 13,1%, N = 2,8%

Beispiel 5

10 g Bis-(2,2,6,6-tetramethyl-4-piperidyl)-fumarat, 9 g Acrylsäuremethylester und 0,5 g AIBN als Katalysator wurden in 50 ml Butylacetat 9 Stunden auf 100 bis 110° C unter Stickstoff erhitzt. Nach dem Einengen blieben 17 g eines Bis-(2,2,6,6-tetramethyl-4-piperidyl)-fumarat-Acrylsäuremethylester-Copolymerisates vom Fp. 73 bis 78°C.

Analyse: C = 60,9%, H = 8,7%, N = 3,6%

Molgewicht: 2070

Analog wurde mit dem entsprechenden Maleinat copolymerisiert. Ausbeute: 18,5 g eines Harzes.

Beispiel 6

Zunächst wurde ein Fumarsäuredimethylester-Ethylen-Copolymerisat in folgender Weise hergestellt:

200 g Fumarsäuredimethylester, 1000 g Isooctan und 10 g $\alpha,\alpha'$-Azobisisobutyronitril wurden vorgelegt, 40 bar Ethylen aufgedrückt und 5 Stunden auf 90°C erhitzt, wobei sich ein Enddruck von 79 bar einstellte. Anschliessend wurde das Lösungsmittel im Vakuum abgezogen. Man erhielt 225 g eines Produktes vom Schmelzpunkt 120 bis 140°C. Die Esterzahl betrug 550 (theoretisch für ein 1:1-Copolymerisat: 561), das Molgewicht 2970.

51,6 g des vorstehenden Copolymerisates, 300 ml Xylol (absolut), 94,2 g 2,2,6,6-Tetramethylpiperidinol-4 und 0,5 g Lithiumamid wurden in einer 1-l-Rührapparatur mit 30 cm Kolonne und aufgesetzter Destille vorgelegt. Unter schwachem Durchleiten von $N_2$ wurden innerhalb von 3 Stunden 20 g Reaktionsmethanol im Gemisch mit etwas Xylol abdestilliert. Die Reaktionslösung wurde sodann mit Wasser gewaschen und im Rotationsverdampfer vom Lösungsmittel befreit. Das Produkt stellte ein Harz vom Molgewicht 1900 dar.

Analyse: C = 67,9%, H = 10,0%, N = 6,4%

Beispiel 7

Es wurden zunächst die folgenden Maleinsäureanhydrid-Olefin-Copolymerisate hergestellt:

a) Ethylen-Maleinsäureanhydrid-Copolymerisat

49 g Maleinsäureanhydrid, 400 g Toluol und 4 g AIBN wurden in einem Stahlautoklaven vorgelegt. Es wurden 50 bar Ethylen aufgedrückt, worauf man 8 Stunden bei 90°C rührte (Enddruck 97 bar). Anschliessend wurde einrotiert, wonach 75 g eines Feststoffs zurückblieben. Fp. 180 bis 185°C.

b) Propylen-Maleinsäureanhydrid-Copolymerisat

Es wurde analog 7a, jedoch mit 10 bar Propylen gearbeitet (Enddruck <10 bar). 71 g Fp. 165 bis 170°C.

c) Octen-Maleinsäureanhydrid-Copolymerisat

98 g Maleinsäureanhydrid, 112 g Octen-1, 800 g Toluol und 4 g AIBN wurden 9 Stunden bei 90°C gerührt. Anschliessend wurde einrotiert und dabei nicht umgesetztes Ausgangsmaterial verdampft. 90 g Fp. 59°C.

d) Dodecen-Maleinsäureanhydrid-Copolymerisat

Es wurde analog 7c verfahren, wobei 117 g eines Feststoffes erhalten wurden. Fp. 70 bis 75°C.

Zur weiteren Umsetzung dieser Copolymerisate wurde mit 2,2,6,6-Tetramethylpiperidinol-4 zur Reaktion gebracht.

$\alpha$) 12,6 g des nach a erhaltenen Copolymerisates und 15,7 g 2,2,6,6-Tetramethylpiperidinol-4 wurden 8 Stunden in 100 ml Dimethylformamid auf 80°C erhitzt. Das gewünschte Ethylen-Maleinsäure-2,2,6,6-tetramethyl-4-piperidylhalbester-Copolymerisat fiel hierbei aus und wurde durch Filtration gewonnen. Fp. 178 bis 185°C.

Ausbeute: 25 g

Analyse: C = 61,7%, H = 9,5%, N = 5,7%

$\beta$) Die Darstellung erfolgte analog $\alpha$ aus dem Piperidinol und 14 g des Copolymerisats nach b. Man erhielt ein Propylen-Maleinsäure-2,2,6,6-tetramethyl-4-piperidylhalbester-Copolymerisat vom Fp. 210 bis 217°C.

Ausbeute: 28 g

Analyse: C = 61,3%, H = 9,4%, N = 4,7%

$\gamma$) Arbeitsweise analog $\alpha$ aus 21,0 g des Copolymerisates aus Beispiel c und dem Piperidinol. Ausbeute: 16 g Octen-1-maleinsäure-2,2,6,6-tetramethyl-4-piperidylhalbester-Copolymerisat vom Fp. 202 bis 210° C.

Analyse: C = 67,1%, H = 9,4%, N = 4,0%

δ) Herstellung wie unter α angegeben aus 26,6 g des Copolymerisats nach d und dem Piperidinol. Fp. 166 bis 170°C.

Ausbeute: 32 g

Analyse: C = 67,3%, H = 10,7%, N = 4,0%

Beispiel 8

10,1 g eines Styrol-Maleinsäureanhydrid-Copolymerisates (SMA-Harz 2625 A von Sinclair Petrochemicals) und 20,4 g 2,2,6,6-Tetramethyl-4-stearylaminopiperidin wurden in 200 ml Dimethylformamid 10 Stunden auf 80° C erhitzt. Dann wurde zur Trockene eingedampft, wobei 28 g eines Styrol-Maleinsäure-2,2,6,6-tetramethyl-4-stearylaminopiperidylhalbester-Copolymerisats vom Fp. 110 bis 118°C zurückblieben.

Analyse: C = 74,9%, H = 11,8%, N = 6,2%

Beispiel 9

41 g eines Styrol-Maleinsäureanhydrid-Copolymerisates (SMA-Harz 2625 A von Sinclair Petrochemicals) wurden mit 31,4 g 2,2,6,6-Tetramethylpiperidinol-4 in 200 ml wasserfreiem Dioxan 4 Stunden bei 100°C unter Stickstoff gerührt. Es fiel ein Feststoff aus, der abgenutscht und getrocknet wurde.

Ausbeute: 55 g eines Styrol-Maleinsäure-2,2,6,6-tetramethyl-4-piperidylhalbester-Copolymerisates vom Fp. 199 bis 220°C.

Analyse: C = 71,7%, H = 8,3%, N = 2,0%

Molgewicht 1010

Beispiel 10

35 g eines Octadecen-1-Maleinsäureanhydrid-Copolymerisates (PA 18 der Firma Gulf Oil Chemicals Company) und 15,7 g 2,2,6,6-Tetramethylpiperidinol-4 wurden in 200 g absolutem Toluol 16 Stunden unter Stickstoff auf Rückflusstemperatur erhitzt. Anschliessend wurde einrotiert und getrocknet.

Man erhielt 48 g eines Maleinsäure-2,2,6,6-tetramethyl-4-piperidylhalbester-Octadecen-1-Copolymerisates vom Fp. 168 bis 172°C.

Analyse: C = 72,0%, H = 11,8%, N = 2,7%

Molgewicht: 1580

Beispiel 11

17,5 g des in Beispiel 10 eingesetzten Ausgangsmaterials, 10,6 g 2,2,6,6-Tetramethyl-4-butylaminopiperidin und 200 ml Toluol wurden 16 Stunden unter Stickstoff am Rückfluss gekocht und anschliessend einrotiert. Man erhielt 25 g eines Maleinsäure-2,2,6,6-tetramethyl-4-butylaminopiperidyl-halbamidoctadecen-1-Copolymerisates vom Fp. 158 bis 162°C.

Analyse: C = 73,1%, H = 12,1%, N = 4,7%

Molgewicht: 1390

Beispiel 12

Es wurde analog Beispiel 11 mit dem in Beispiel 10 eingesetzten Ausgangsmaterial und 12,0 g 2,2,6,6-Tetramethyl-4-hexylaminopiperidin gearbeitet.

Ausbeute: 27,1 g eines Maleinsäure-2,2,6,6-tetramethyl-4-hexylaminopiperidyl-halbamidoctadecen-1-Copolymerisates vom Fp. 159 bis 163°C

Analyse: C = 73,9%, H = 12,4%, N = 4,5%

Molgewicht: 1140

Beispiel 13

Es wurde wie in Beispiel 11 mit 20,4 g 2,2,6,6-Tetramethyl-4-stearylaminopiperidin und dem in Beispiel 10 verwendeten Copolymerisat gearbeitet.

Man erhielt 37,1 g eines Maleinsäure-2,2,6,6-tetramethyl-4-octadecylaminopiperidyl-halbamid-octadecen-1-Copolymerisates vom Fp. 141 bis 147°C.

Analyse: C = 77,2%, H = 13,3%, N = 3,3%

Molgewicht: 1120

Beispiel 14

12,6 g des nach Beispiel 7a erhaltenen Copolymerisats wurden in 100 ml Dimethylformamid mit 21,2 g 2,2,6,6-Tetramethyl-4-butylaminopiperidin 5 Stunden bei 90 bis 100°C gerührt. Im Laufe der Reaktion fiel ein feinkörniger Niederschlag aus, der abgenutscht, mit Ether gewaschen und getrocknet wurde.

Ausbeute: 32 g, Fp. 122 bis 124°C

Analyse: C = 59,4%, H = 10,2%, N = 9,7%

Analog wurde mit 24 g 2,2,6,6-Tetramethyl-4-hexylaminopiperidin umgesetzt und zur Trockene eingedampft.

Ausbeute: 32 g, Fp. 196 bis 208°C

Analog wurde mit 40,8 g 2,2,6,6-Tetramethyl-4-octadecylaminopiperidin umgesetzt und einrotiert.

Ausbeute: 47 g, Fp. 164 bis 179°C

Beispiel 15

Analog Beispiel 14 wurde das Präcopolymerisat nach Beispiel 7b umgesetzt und die Reaktionslösung einrotiert, wobei 30 g eines Polymeren vom Fp. 225 bis 230°C anfielen.

Beispiel 16

Anallog Beispiel 14 wurde das Präpolymerisat nach Beispiel 7c umgesetzt, wobei 35 g eines Feststoffes vom Fp. 223 bis 234°C anfielen.

Beispiel 17

Analog Beispiel 14 wurde das Präpolymerisat nach Beispiel 7d umgesetzt. Ausbeute: 22 g vom Fp. 187 bis 194°C.

Beispiel 18

Dieses Beispiel zeigt die Flüchtigkeit der erfindungsgemässen Copolymerisate im Vergleich zu Produkten des nächsten Standes der Technik.

Die Flüchtigkeiten wurden in einer Apparatur zur thermogravimetrischen Analyse bestimmt. Gleiche Mengen (500 mg) der erfindungsgemässen Copolymerisate und die Vergleichssubstanzen wurden dazu in Stickstoffatmosphäre mit einer Aufheizgeschwindigkeit von 2 K/min. bis auf 300°C aufgeheizt und der Substanzverlust in mg/$cm^2$ Oberfläche der Schmelze gemessen. Die Ergebnisse zeigt nachfolgende Tabelle:

| Polymerisat nach Beispiel | Gewichtsverlust in mg/cm² Oberfläche beim Erreichen von ...°C 220 | 260 | 300 | nach 10 Min. bei 300°C |
|---|---|---|---|---|
| 1 | 0,01 | 0,64 | 9,70 | 19,08 |
| 2 | 0,03 | 0,95 | 9,06 | 16,85 |
| Vergleich 1[1)] | 0,95 | 2,38 | 17,49 | 65,87 |
| Vergleich 2[2)] | 0,05 | 1,11 | 9,54 | 58,83 |
| Vergleich 3[3)] | 2,70 | 18,30 | 114,48 | 135,15 |

[1)] = Bis-(2,2,6,6-tetramethyl-4-piperidyl)-sebacat (DE-PS 1 929 928, DE-OS 2204659)

[2)] = Polymeres gemäss Beispiel 1 der DE-OS 2719131

[3)] = Bis-(2,2,6,6-tetramethyl-4-piperidyl)-fumarat

Beispiel 19

100 Gewichtsteile Polypropylen mit einem Schmelzindex $i_5$ von ca. 6 g/10 min. (bestimmt nach ASTM D 1238-62 T) und einer Dichte von 0,9 wurden mit

0,1 Gew.-Teilen Pentaerythrityl-tetrakis-[3-(3,5-di-tert.-butyl-4-hydroxyphenyl)-propionat],

0,2 Gew.-Teilen Calciumstearat und

dem zu prüfenden erfindungsgemässen Stabilisator vermischt, wobei die Stabilisatormenge so bemessen wurde, dass jeweils 0,0175 Gew.-Teile Stabilisatorstickstoff enthalten waren.

Um eine möglichst gleichmässige Verteilung auf dem Polymerkorn zu erreichen, wurden die Stabilisatoren in einem Lösemittel gelöst, und die Lösung wurde unter Rühren in das Polypropylenpulver eingetropft, wobei durch gleichzeitige Bestrahlung mit einer IR-Lampe der grösste Teil des Lösemittels wieder abdampfte. Nach ca. 20 Minuten wurde das Calciumstearat hinzugegeben und noch weitere 10 Minuten gemischt. Lösemittelreste wurden durch Trocknen bei 50°C/120 Min. im Trockenschrank entfernt.

Das Polypropylen wurde auf einer Windsor-Spritzgussmaschine der Type SP 50 bei 240°C zu 60 x 60 x 1 mm-Platten verspritzt. Aus diesen Platten wurden Prüfkörper nach DIN 53455, Form 3, verkleinert im Massstab 1:3, ausgestanzt. Die als Vergleichsmuster benötigten Prüfkörper wurden analog, jedoch unter Fortlassen des zu testenden Stabilisators bzw. unter Zusatz der Vergleichsstabilisatoren, hergestellt.

Zur Bestimmung der Lichtstabilität wurden die Proben in einer Xenotest-1200-Apparatur der Firma Original Hanau Quarzlampen GmbH der Bestrahlung mit Wechsellicht unterworfen. Die Strahlungsintensität wurde durch UV-Filter (Spezialfilterglas d = 1,7 mm) moduliert. Die Lichtbeständigkeit wurde nach DIN 53387 (17 Minuten befeuchten, 3 Minuten beregnen, Schwarztafeltemperatur 45°C, Luftfeuchtigkeit 70 bis 75%) geprüft. Gemessen wurde die Belichtungszeit in Stunden und die Reissdehnung bestimmt. Die Reissdehnung wurde auf einer Zugprüfmaschine der Firma Instron bei einer Abzugsgeschwindigkeit von 5 cm/Min. ermittelt.

| Stabilisator nach Beispiel (Gew.-Teile) | | Belichtungszeit in Stunden | ermittelte Reissdehnung in % vom Ausgangswert |
|---|---|---|---|
| 1 | (0,50) | 1000 | > 50 |
| 2 | (0,62) | 1000 | > 50 |
| Vergleich 1 | (0,30) | 1000 | 1 |
| Vergleich 2 | (0,37) | 300 | 50 |
| Polypropylen[1)] | | 260 | < 1 |
| Vergleich[2)] | | 320 | < 1 |

[1)] ohne jeglichen Stabilisator

[2)] nur mit Ca-Stearat und Pentaerythritylverbindung

Beispiel 20

Zu Polypropylen (Hostalen®PPU VP 1770 F) vom Schmelzindex MFI 190/51,9 g/10 Min. s. DIN 53735 werden 0,1 bis 0,25 Gew.-Teile der unten angegebenen Stabilisatoren über einen Laborschnellmischer eingemischt. Das so stabilisierte Material wurde in einem Laborextruder unter den üblichen Verarbeitungsbedingungen aufgeschmolzen und über eine Spinnpumpe mit Mehrfachspinnkopf zu Monofilamenten (87 dtex) verarbeitet, welche anschliessend im Verhältnis 1:2,5 nachverstreckt wurden. Je 24 dieser Filamente wurden zu Garn texturiert und diese zu Prüfgeweben verarbeitet. Die Prüflinge wurden in einem Fadeometer der Lichtechtheitsprüfung unterzogen und nach der angegebenen Belichtungszeit dem Fingernageltest (leichtes Darüberreiben über das Gewebe mit dem Daumennagel) unterzogen.

0 = keine Beschädigung, 1 bis 5 zunehmende Zerstörbarkeit

| Stabilisator gemäss Beispiel (Gew.-Teile) | | Zerstörbarkeit des Gewebes nach ... Stunden Belichtungszeit 40 | 80 | 160 |
|---|---|---|---|---|
| 1 | (0,1) | 0 | 0 | 0 |
| ohne Stabilisator | | 0 | 2 | 5 |
| Vergleich[1] | (0,1) | 0 | 0 | 3 |
| Vergleich[1] | (0,25) | 0 | 0 | 1 |

[1] Bis-(2,2,6,6-tetramethyl-4-piperidyl)-sebacat (DE-PS 1929928, DE-OS 2204659)

Beispiel 21

Polypropylenplatten gemäss Beispiel 19 wurden 168 Stunden bei 80°C in destilliertem Wasser behandelt. Anschliessend wurden wie unter Beispiel 19 beschrieben, Prüfkörper ausgestanzt. Die Prüfung der Lichtbeständigkeit wurde in einer Xenotest-450-Apparatur der Firma Original Hanau Quarzlampen GmbH mit der Filterkombination 6 IR + 1 UV gemäss DIN 53387 «Kurzprüfung der Wetterbeständigkeit» geprüft. Während der Belichtungszeit betrug die Schwarztafeltemperatur 43°C ± 1°C, die relative Luftfeuchtigkeit im Probenraum 70% ± 1%. Der Probenraum wurde alle 2 Stunden 5 Minuten lang mit Frischluft gespült. Die Reissdehnung wurde auf einer Zugprüfmaschine der Firma Instron bei einer Abzugsgeschwindigkeit von 5 cm/Min. nach einer definierten Belichtungszeit ermittelt. Die Ergebnisse sind in der nachfolgenden Tabelle zusammengestellt:

| Stabilisator nach Beispiel | Belichtungszeit in Stunden | ermittelte Reissdehnung in % vom Ausgangswert |
|---|---|---|
| 1 | 700 | >50 |
| 2 | 700 | >50 |
| Vergleich[1] | 700 | <50 |

[1] Bis-(2,2,6,6-tetramethyl-4-piperidyl)-sebacat

Beispiel 22

Polyethylen niederer Dichte (Hostalen® LD J 4024) wurde, stabilisiert mit 0,3 Gew.-Teilen Stabilisator, analog Beispiel 19 zu Platten (60 mm x 60 mm x 1 mm) verspritzt und 24 Stunden bei 90°C gelagert. Danach wurde geprüft, ob sich ein Belag des Stabilisators an der Oberfläche gebildet hatte.

0 = kein Belag, 1 = Belag, 2 = leicht abwischbarer starker Belag

| Stabilisator nach Beispiel | Belag |
|---|---|
| 1 | 0 |
| 2 | 0 |
| Vergleich[1] | 2 |

[1] Bis-(2,2,6,6-tetramethyl-4-piperidyl)-sebacat

**Patentansprüche für die Vertragsstaaten: BE, CH, DE, FR, GB, IT, LI, NL.**

1. Copolymerisate mit Molekulargewichten von 1000 bis 10000 aus einem oder mehreren Polyalkylpiperidinen der allgemeinen Formel (I),

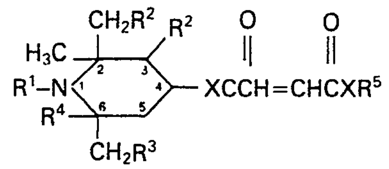
(I)

und einem oder mehreren Comonomeren der allgemeinen Formel (II)

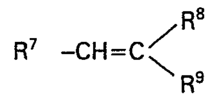
(II)

wobei das Verhältnis Monomere I zu Monomere II 1:1 beträgt und wobei in den Monomeren der Formel (I)

$R^1$ Wasserstoff oder $C_1$– bis $C_{18}$-Alkyl ist,

$R^2$ und $R^3$ entweder gleich sind und Wasserstoff oder eine $C_1$– bis $C_5$-Alkylgruppe bedeuten, und dann

$R^4$ für eine Methylgruppe steht, oder

$R^2$ Wasserstoff oder $C_1$– bis $C_5$-Alkyl ist und in diesem Falle

$R^3$ und $R^4$ zusammen mit den Kohlenstoffatomen, an die sie gebunden sind, eine $C_5$– oder $C_6$-Cycloalkylgruppe oder eine Gruppe der Formel (III)

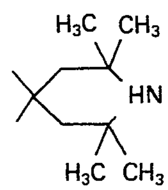
(III)

darstellen,

$R^5$ Wasserstoff, $C_1$– bis $C_{18}$-Alkyl oder eine Gruppe der Formel (IV)

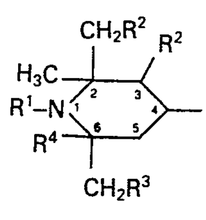
(IV)

ist, in welcher $R^1$, $R^2$, $R^3$ und $R^4$ die oben angegebenen Bedeutungen haben, und

X für ein Sauerstoffatom oder eine $-NR^6$-Gruppe steht, wobei

$R^6$ ein Wasserstoffatom, eine $C_1$– bis $C_{18}$-Alkylgruppe oder eine Gruppe der Formel (IV) ist, während in den Monomeren der Formel (II)

$R^7$ Wasserstoff oder eine Gruppe der Formel $COOR^{10}$ mit

$R^{10}$ = $C_1$– bis $C_{18}$-Alkyl ist,

$R^8$ ein Wasserstoffatom oder eine Methylgruppe bedeutet, und

$R^9$ für Wasserstoff oder für $C_1$– bis $C_{36}$-Alkyl, oder für Phenyl, oder für Chlor, oder für Acetyl, oder für eine Gruppe der Formel $-OR^{11}$ mit $R^{11}$ = Wasserstoff oder $C_1$– bis $C_{18}$-Alkyl, oder für eine Gruppe der Formel $-COOR^{12}$ mit $R^{12}$ = Alkyl- oder Hydroxyalkyl mit 1 bis 18 C-Atomen oder ein Rest der Formel (IV), steht.

2. Verfahren zur Herstellung von Copolymerisaten nach Anspruch 1, dadurch gekennzeichnet, dass man entweder

a) ein Monomeres oder ein Monomerengemisch der Formel (I) mit der mindestens äquimolaren Menge eines Comonomeren oder eines Comonomerengemisches der Formel (II) in einem organischen Lösungsmittel oder in Wasser in Gegenwart von 0,01 bis 15 Gew.-% eines ionischen Starters oder eines üblichen Radikalstarters und 0 bis 6 Gew.-% eines Emulgators – jeweils bezogen auf die Gesamtmenge der Monomeren – bei 50 bis 180°C miteinander copolymerisiert, wobei bei gasförmigen Comonomeren unter einem Druck von 20 bis 300 bar gearbeitet wird, oder

b) zunächst einen Niedrigalkylester der Fumarsäure oder der Maleinsäure oder Maleinsäureanhydrid bei den unter a angegebenen Bedingungen mit der äquimolaren Menge eines oder mehrerer Monomeren der Formel (II) copolymerisiert, worauf man das erhaltene Copolymerisat mit einer Polyalkylpiperidinverbindung der Formel (VI)

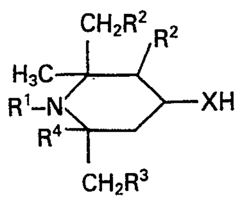

(VI)

in der $R^1$, $R^2$, $R^3$, $R^4$ und X die in Anspruch 1 angegebene Bedeutung haben, in der Weise weiter umsetzt, dass man in einem inerten Lösungsmittel bei Einsatz eines Maleinsäureanhydrid-Copolymerisates auf 50 bis 150°C und bei Einsatz eines Fumar- oder Maleinsäureester-Copolymerisates unter Zugabe eines Umesterungskatalysators auf 80 bis 250°C erhitzt, wobei im Falle, dass $R^5$ = $C_1$– bis $C_{18}$-Alkyl sein soll, der entsprechende Alkohol bzw. das entsprechende Amin in der äquimolaren Menge, bezogen auf Polyalkylpiperidinverbindung, zuzusetzen ist.

3. Verwendung der Polymeren nach Anspruch 1 zum Stabilisieren von synthetischen Polymeren gegen den schädigenden Einfluss von Licht.

4. Verwendung nach Anspruch 3, dadurch gekennzeichnet, dass das Polymere ein Polyolefin ist.

5. Verwendung nach Anspruch 3, dadurch gekennzeichnet, dass das Polymere ein halogenhaltiges Polymeres ist.

6. Verwendung nach Anspruch 3, dadurch gekennzeichnet, dass das Polymere ein Polyacrylat oder Polymethacrylat ist.

7. Verwendung nach Anspruch 3, dadurch gekennzeichnet, dass das Polymere ein Homo- oder Copolymeres von Polystyrol ist.

8. Verfahren zum Stabilisieren von synthetischen Polymeren gegen den schädigenden Einfluss von Licht, dadurch gekennzeichnet, dass man dem Polymeren, gegebenenfalls neben bisher bekannten, stabilisierend wirkenden Stoffen, 0,01 bis 5 Gewichtsteile, bezogen auf Polymeres, eines polymeren Stabilisators nach Anspruch 1 zusetzt.

9. Gegen UV-Zersetzung stabilisierte, synthetische Polymere, in denen 0,01 bis 5 Gewichtsteile, bezogen auf Polymeres, eines polymeren Stabilisators nach Anspruch 1 enthalten ist.

**Patentansprüche für den Vertragsstaat: AT**

1. Verfahren zur Herstellung von Copolymerisaten mit Molekulargewichten von 1000 bis 10000 aus einem oder mehreren Polyalkylpiperidinen der allgemeinen Formel (I),

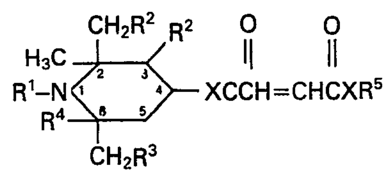

(I)

und einem oder mehreren Comonomeren der allgemeinen Formel (II)

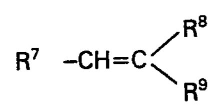

(II)

wobei das Verhältnis Monomere I zu Monomere II 1:1 beträgt und wobei in den Monomeren der Formel (I)

$R^1$ Wasserstoff oder $C_1$– bis $C_{18}$-Alkyl ist,

$R^2$ und $R^3$ entweder gleich sind und Wasserstoff oder eine $C_1$– bis $C_5$-Alkylgruppe bedeuten, und dann

$R^4$ für eine Methylgruppe steht, oder

$R^2$ Wasserstoff oder $C_1$– bis $C_5$-Alkyl ist und in diesem Falle

$R^3$ und $R^4$ zusammen mit den Kohlenstoffatomen, an die sie gebunden sind, eine $C_5$– oder $C_6$-Cycloalkylgruppe oder eine Gruppe der Formel (III)

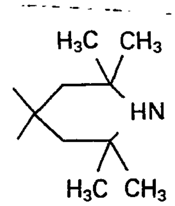

(III)

darstellen,

$R^5$ Wasserstoff, $C_1$– bis $C_{18}$-Alkyl oder eine Gruppe der Formel (IV)

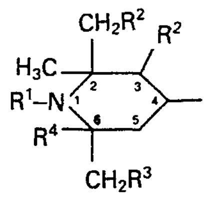

(IV)

ist, in welcher $R^1$, $R^2$, $R^3$ und $R^4$ die oben angegebenen Bedeutungen haben, und

X für ein Sauerstoffatom oder eine $-NR^6$-Gruppe steht, wobei

$R^6$ ein Wasserstoffatom, eine $C_1$– bis $C_{18}$-Alkylgruppe oder eine Gruppe der Formel (IV) ist, während in den Monomeren der Formel (II)

$R^7$ Wasserstoff oder eine Gruppe der Formel $COOR^{10}$ mit

$R^{10}$ = $C_1$– bis $C_{18}$-Alkyl ist,

$R^8$ ein Wasserstoffatom oder eine Methylgruppe bedeutet, und

$R^9$ für Wasserstoff oder für $C_1$– bis $C_{36}$-Alkyl, oder für Phenyl, oder für Chlor, oder für Acetyl, oder für eine Gruppe der Formel $-OR^{11}$ mit $R^{11}$ = Wasserstoff oder $C_1$– bis $C_{18}$-Alkyl, oder für eine Gruppe der Formel $-COOR^{12}$ mit $R^{12}$ = Alkyl- oder Hydroxyalkyl mit 1 bis 18 C-Atomen oder ein Rest der Formel (IV), steht, dadurch gekennzeichnet, dass man entweder

a) ein Monomeres oder ein Monomerengemisch der Formel (I) mit der mindestens äquimolaren Menge eines Comonomeren oder eines Comonomerengemisches der Formel (II) in einem organischen Lösungsmittel oder in Wasser in Gegenwart von 0,01 bis 15 Gew.-% eines ionischen Starters oder eines üblichen Radikalstarters und 0 bis 6 Gew.-% eines Emulgators – jeweils bezogen auf die Gesamtmenge der Monomeren – bei 50 bis 180°C miteinander copolymerisiert, wobei bei gasförmigen Comonomeren unter einem Druck von 20 bis 300 bar gearbeitet wird, oder

b) zunächst einen Niedrigalkylester der Fumarsäure oder der Maleinsäure oder Maleinsäureanhydrid bei den unter a angegebenen Bedingungen mit der äquimolaren Menge eines oder mehrerer Monomeren der Formel (II) copolymerisiert, worauf man das erhaltene Copolymerisat mit einer Polyalkylpiperidinverbindung der Formel (VI)

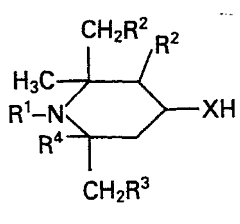

(VI)

in der $R^1$, $R^2$, $R^3$, $R^4$ und X die in Anspruch 1 angegebene Bedeutung haben, in der Weise weiter umsetzt, dass man in einem inerten Lösungsmittel bei Einsatz eines Maleinsäureanhydrid-Copolymerisates auf 50 bis 150°C und bei Einsatz eines Fumar- oder Maleinsäureester-Copolymerisates unter Zugabe eines Umesterungskatalysators auf 80 bis 250°C erhitzt, wobei im Falle, dass $R^5$ = $C_1$– bis $C_{18}$–Alkyl sein soll, der entsprechende Alkohol bzw. das entsprechende Amin in der äquimolaren Menge, bezogen auf Polyalkylpiperidinverbindung, zuzusetzen ist.

2. Verwendung der nach Anspruch 1 hergestellten Polymeren zum Stabilisieren von synthetischen Polymeren gegen den schädigenden Einfluss von Licht.

3. Verwendung nach Anspruch 2, dadurch gekennzeichnet, dass das Polymere ein Polyolefin ist.

4. Verwendung nach Anspruch 2, dadurch gekennzeichnet, dass das Polymere ein halogenhaltiges Polymeres ist.

5. Verwendung nach Anspruch 2, dadurch gekennzeichnet, dass das Polymere ein Polyacrylat oder Polymethacrylat ist.

6. Verwendung nach Anspruch 2, dadurch gekennzeichnet, dass das Polymere ein Homo- oder Copolymeres von Polystyrol ist.

7. Verfahren zum Stabilisieren von synthetischen Polymeren gegen den schädigenden Einfluss von Licht, dadurch gekennzeichnet, dass man dem Polymeren, gegebenenfalls neben bisher bekannten, stabilisierend wirkenden Stoffen, 0,01 bis 5 Gewichtsteile, bezogen auf Polymeres, eines polymeren nach Anspruch 1 hergestellten Stabilisators zusetzt.

8. Gegen UV-Zersetzung stabilisierte, synthetische Polymere, in denen 0,01 bis 5 Gewichtsteile, bezogen auf Polymeres, eines nach Anspruch 1 hergestellten polymeren Stabilisators enthalten ist.

**Claims for the contracting states: BE, CH, LI, DE, FR, GB, IT, NL**

1. Copolymeres having a molecular weihgt of from 1000 to 10000 of one or several polyalkyl piperidines of the formula (I)

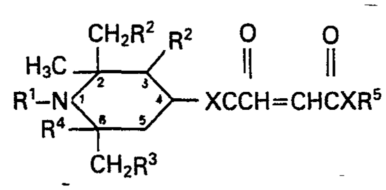

(I)

and one or several comonomers of the formula (II)

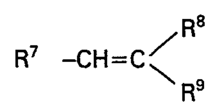

(II)

in which the molar ratio of monomer (I) to monomer (II) is 1:1 and wherein in the monomers of formula (I)

$R^1$ is hydrogen or $C_1$ to $C_{18}$-alkyl,

$R^2$ and $R^3$ are either the same and represent hydrogen or $C_1$ to $C_5$-alkyl, in which case

$R^4$ is methyl, or

$R^2$ is hydrogen or $C_1$ to $C_5$-alkyl, in which case

$R^3$ and $R^4$, together with the carbon atoms to which they are bound, represent a $C_5$ or $C_6$-cycloalkyl group or a group of the formula (III)

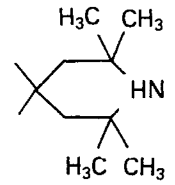

(III)

$R^5$ is hydrogen, $C_1$ to $C_{18}$-alkyl or a group of the formula (IV)

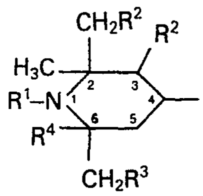

(IV)

in which $R^1$, $R^2$, $R^3$ and $R^4$ are defined as above, and

X stands for an oxygen atom or a group $-N'R^6$,
$R^6$ being hydrogen, $C_1$ to $C_{18}$-alkyl or a group of the formula (IV), whereas in the monomers of the formula (II)
$R^7$ is hydrogen or a group of formula $COOR^{10}$ with
$R^{10}$ being $C_1$ to $C_{18}$-alkyl,
$R^8$ is hydrogen or methyl, and
$R^9$ is hydrogen or $C_1$ to $C_{36}$-alkyl, or phenyl, or chlorine, or acetyl, or a group of formula $-OR^{11}$ with $R^{11}$ being hydrogen or $C_1$ to $C_{18}$-alkyl, or a group of the formula $-COOR^{12}$ with $R^{12}$ being alkyl or hydroxyalkyl with 1 to 18 carbon atoms or a radical of the formula (IV).

2. Process for the manufacture of copolymers as claimed in claim 1, which comprises either

a) copolymerizing a monomer or a monomer mixture of the formula (I) with at least en equimolar amount of a comonomer or comonomer mixture of the formula (II) in an organic solvent or in water in the presence of from 0.01 to 15% by weight of an ion forming agent or of a common radical forming agent and of from 0 to 6% by weight of an emulsifier, each calculated on the total amount of the monomers, at 50 to 180°C, the working pressure in the case of gaseous comonomers being in the range of from 20 to 300 bars, or

b) copolymerizing at first a lower alkyl ester of fumaric acid or maleic acid or maleic acid anhydride under the conditions indicated under a) with the equimolar amount of one or several monomers of formula (II), whereupon the resulting copolymer is further reacted with a polyalkyl piperidine compound of formula (VI)

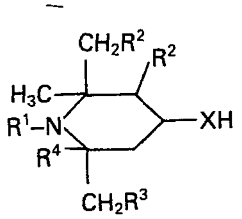

(VI)

in which $R^1$, $R^2$, $R^3$, $R^4$ and X are defined as in claim 1, in a way that the mixture is heated in an inert solvent to 50 to 150°C – when using a maleic acid anhydride copolymer – and to 80 to 250°C with the addition of a transesterification catalyst, when using a fumaric or maleic acid ester copolymer, wherein in the case where $R^5$ is to be $C_1$ to $C_{18}$-alkyl, the corresponding alcohol or the corresponding amine is to be added in the equimolar amount, calculated on the polyalkyl piperidine compound.

3. Use of the polymers of claim 1 for stabilizing synthetic polymers to the damaging influence of light.

4. Use as claimed in claim 3, wherein the polymer is a polyolefin.

5. Use as claimed in claim 3, wherein the polymer is a halogen-containing polymer.

6. Use as claimed in claim 3, wherein the polymer is a polyacrylate or polymethacrylate.

7. Use as claimed in claim 3, wherein the polymer is a homo- or copolymer of polystyrene.

8. Process for stabilizing synthetic polymers to the damaging influence of light, which comprises adding to the polymer – optionally in addition to known substances having a stabilizing effect – from 0.01 to 5 parts by weight, calculated on the polymer, of a polymer stabilizer as claimed in claim 1.

9. Synthetic polymers stabilized to UV decomposition, which contain from 0.01 to 5 parts by weight, calculated on the polymer, of a polymer stabilizer as claimed in claim 1.

**Claims for the contracting state: AT**

1. Process for the manufacture of copolymers having a molecular weight of from 1000 to 10000 of one or several polyalkyl piperidines of the general formula (I)

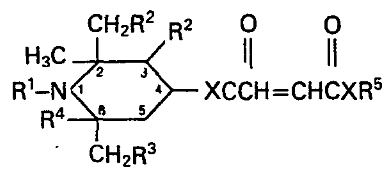

(I)

and one or several comonomers of the general formula (II)

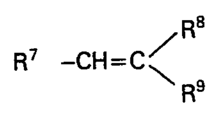

(II)

in which the molar ratio of monomer (I) to monomer (II) is 1:1 and wherein in the monomers of formula (I)
$R^1$ is hydrogen or $C_1$ to $C_{18}$-alkyl,
$R^2$ and $R^3$ are either the same and represent hydrogen or $C_1$ to $C_5$-alkyl, in which case
$R^4$ is methyl, or
$R^2$ is hydrogen or $C_1$ to $C_5$-alkyl, in which case

$R^3$ and $R^4$, together with the carbon atoms to which they are bound, represent a $C_5$ or $C_6$-cycloalkyl group or a group of the formula (III)

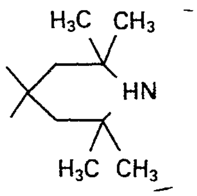

(III)

$R^5$ is hydrogen, $C_1$ to $C_{18}$-alkyl or a group of the formula (IV)

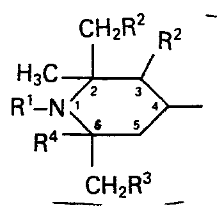

(IV)

in which $R^1$, $R^2$, $R^3$ and $R^4$ are defined as above, and

X stands for an oxygen atom or a group $-NR^6$,
$R^6$ being hydrogen, $C_1$ to $C_{18}$-alkyl or a group of the formula (IV), whereas in the monomers of the formula (II)
$R^7$ is hydrogen or a group of formula $COOR^{10}$ with
$R^{10}$ being $C_1$ to $C_{18}$-alkyl,
$R^8$ is hydrogen of methyl, and
$R^9$ is hydrogen or $C_1$ to $C_{36}$-alkyl, or phenyl, or chlorine, or acetyl, or a group of formula $-OR^{11}$ with $R^{11}$ being hydrogen or $C_1$ to $C_{18}$-alkyl, or a group of the formula $-COOR^{12}$ with $R^{12}$ being alkyl or hydroxyalkyl with 1 to 18 carbon atoms or a radical of the formula (IV), which comprises either

a) copolymerizing a monomer or a monomer mixture of the formula (I) with at least an equimolar amount of a comonomer or comonomer mixture of the formula (II) in an organic solvent or in water in the presence of from 0.01 to 15% by weight of an ion forming agent or of a common radical forming agent and of from 0 to 6% by weight of an emulsifier, each calculated on the total amount of the monomers, at 50 to 180°C, the working pressure in the case of gaseous comonomers being in the range of from 20 to 300 bars, or

b) copolymerizing at first a lower alkyl ester of fumaric acid or maleic acid or maleic acid anhydride under the conditions indicated under a) with the equimolar amount of one or several monomers of formula (II), whereupon the resulting copolymer is further reacted with a polyalkyl piperidine compound of formula (VI)

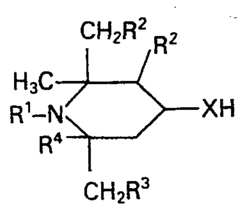

(VI)

in which $R^1$, $R^2$, $R^3$, $R^4$ and X are defined as in claim 1, in a way that the mixture is heated in an inert solvent to 50 to 150°C – when using a maleic acid anhydride copolymer – and to 80 to 250°C with the addition of a transesterification catalyst, when using a fumaric or maleic acid ester copolymer, wherein in the case where $R^5$ is to be $C_1$ to $C_{18}$-alkyl, the corresponding alcohol or the corresponding amine is to be added in the equimolar amount, calculated on the polyalkyl piperidine compound.

2. Use of the polymers prepared according to claim 1 for stabilizing synthetic polymers to the damaging influence of light.

3. Use as claimed in claim 2, wherein the polymer is a polyolefin.

4. Use as claimed in claim 2, wherein the polymer is a halogen-containing polymer.

5. Use as claimed in claim 2, wherein the polymer is a polyacrylate or polymethacrylate.

6. Use as claimed in claim 2, wherein the polymer is a homo- or copolymer of polystyrene.

7. Process for stabilizing synthetic polymers to the damaging influence of light, which comprises adding to the polymer – optionally in addition to known substances having a stabilizing effect – from 0.01 to 5 parts by weight, calculated on the polymer, of a polymer stabilizer prepared according to claim 1.

8. Synthetic polymers stabilized to UV decomposition, which contain from 0.01 to 5 parts by weight, calculated on the polymer, of a polymer stabilizer prepared according to claim 1.

**Revendications pour l'état contractant: AT**

1. Procédé pour préparer des copolymères de poids moléculaires compris entre 1000 et 10000 à partir d'une ou plusieurs polyalkyl-pipéridines de formule générale (I):

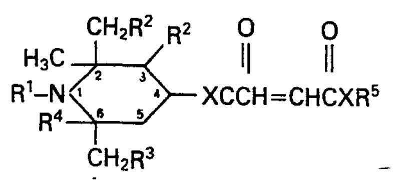

(I)

et d'un ou plusieurs comonomères formule générale (II):

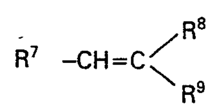

(II)

le rapport du monomère (I) au monomère (II) étant égal à 1:1 et les symboles présents dans les formules représentées cidessus ayant les significations suivantes: – dans la formule (I):

$R^1$ représente l'hydrogène ou un alkyle en $C_1$–$C_{18}$, ou bien
$R^2$ et $R^3$ sont identiques et représentent chacun l'hydrogène ou un alkyle en $C_1$–$C_5$, et alors
$R^4$ représente un radical méthyle, ou bien
$R_2$ représente l'hydrogène ou un alkyle en $C_1$–$C_5$, et alors

$R^3$ et $R^4$ forment ensemble et avec les atomes de carbone auxquels ils sont liés un radical cycloalkyle en $C_5$ ou $C_6$ ou un radical de formule (III):

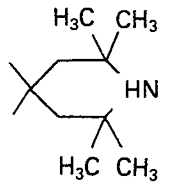

(III)

$R^5$ représente l'hydrogène, un alkyle en $C_1$–$C_{18}$ ou un radical répondant à la formule (IV):

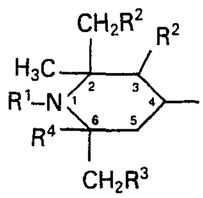

(IV)

dans laquelle $R^1$, $R^2$, $R^3$ et $R^4$ ont les significations indiquées ci-dessus, et

X représente un atome d'oxygène ou un radical $-NR^6$ dans lequel

$R^6$ représente un atome d'hydrogène, un alkyle en $C_1$–$C_{18}$ ou un radical de formule (IV), et – dans la formule (II):

$R^7$ représente l'hydrogène ou un radical de formule $-COOR^{10}$ dans lequel

$R^{10}$ représente un alkyle en $C_1$–$C_{18}$,

$R^8$ représente un atome d'hydrogène ou un radical méthyle, et

$R^9$ représente l-hydrogène, un alkyle en $C_1$–$C_{36}$, un phényle, le chlore, un acétyle, un radical de formule $-OR^{11}$ dans lequel $R^{11}$ représente l'hydrogène ou un alkyle en $C_1$–$C_{18}$, ou un radical de formule $-COOR^{12}$ dans lequel $R^{12}$ représente un alkyle ou un hydroxyalkyle contenant de 1 à 18 atomes de carbone ou un radical de formule (IV),

procédé caractérisé en ce que: ou bien:

a) on copolymérise l'un avec l'autre, à une température de 50 à 180° C, un monomère ou un mélange de monomères de formule (I) et une quantité au moins équimolaire d'un comonomère ou d-un mélange de comonomères de formule (II), dans un solvant organique ou dans l'eau, en présence de 0,01 à 15% en poids d'un amorceur ionique ou d'un amorceur radicalaire usuel et de 0 à 6% en poids d'un émulsionnant (à chaque fois par rapport à la quantité totale des monomères), en opérant, dans le cas d'un comonomère gazeux, sous une pression de 20 à 300 bar, ou bien:

b) on copolymérise d'abord un fumarate d'alkyle inférieur ou un maléate d'alkyle inférieur ou l'anhydride maléique dans les conditions indiquées sous a) avec la quantité équivalente d'un ou de plusieurs monomères de formule (II), après quoi on fait réagir le copolymère obtenu avec un composé polyalkyl-pipéridinique répondant à la formule (VI):

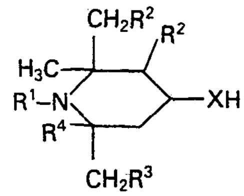

(VI)

dans laquelle $R^1$, $R^2$, $R^3$, $R^4$ et X ont les significations données à la revendication 1, cela en chauffant dans un solvant inerte à une température de 50 à 150° C lorsqu'on utilise un copolymère de l'anhydride maléique et à une température de 80 à 250° C, en présence d'un catalyseur de transestérification, lorsqu'on utilise un copolymère d'ester fumarique ou maléique, et, dans le cas où $R^5$ doit désigner un alkyle en $C_1$–$C_{18}$, l'alcool correspondant ou l'amine correspondante devant être ajouté en la quantité équimolaire par rapport au composé polyalkyl-pipéridinique.

2. Application des polymères préparés selon la revendication 1 à la stabilisation de polymères synthétiques contre l'action destructrice de la lumière.

3. Application selon la revendication 2, caractérisée en ce que le polymère est une polyoléfine.

4. Application suivant la revendication 2, caractérisée en ce que le polymère est un polymère halogéné.

5. Application suivant la revendication 2, caractérisée en ce que le polymère est un polyacrylate ou un polyméthacrylate.

6. Application selon la revendication 2, caractérisée en ce que le polymère est un homopolymère ou un copolymère du styrène.

7. Procédé pour stabiliser des polymères synthétiques contre l'action destructrice de la lumière, procédé caractérisé en ce qu'on ajoute au polymère, éventuellement en plus de composés à action stabilisante connus, de 0,01 à 5 parties en poids, par rapport au polymère, d'un stabilisant polymère qui a été préparé selon la revendication 1.

8. Polymères synthétiques stabilisés contre la décomposition par les ultra-violets, polymères qui contiennent de 0,01 à 5 parties en poids, par rapport au polymère, d'un stabilisant polymère qui a été préparé selon la revendication 1.

**Revendications pour les etats contracts: BE, CH, LT, DE, FR, GB, IT, NL**

1. Copolymères qui ont des poids moléculaires de 1000 à 10000 et qui sont formés d'une ou plusieurs polyalkylpipéridines de formule générale (I):

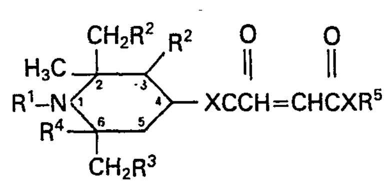

(I)

et d'un ou plusieurs comonomères de formule générale (II):

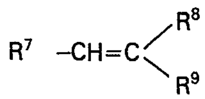
(II)

le rapport du monomère (I) au monomère (II) étant égal à 1:1 et les différents symboles présents dans les formules précédentes ayant les significations indiquées ci-dessous: – dans la formule (I):

$R^1$ représente l'hydrogène ou un alkyle en $C_1$–$C_{18}$, ou bien

$R^2$ et $R^3$ sont identiques et représentent chacun l'hydrogène ou un alkyle en $C_1$–$C_5$, et alors

$R^4$ représente un radical méthyle, ou bien $R^2$ représente l'hydrogène ou un alkyle en $C_1$–$C_5$, et alors $R^3$ et $R^4$ forment ensemble et avec les atomes de carbone auxquels ils sont liés un radical cycloalkyle en $C_5$ ou $C_6$ ou un radical de formule (III):

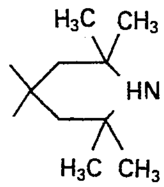
(III)

$R^5$ représente l'hydrogène, un alkyle en $C_1$–$C_{18}$ ou un radical répondant à la formule (IV):

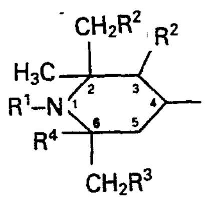
(IV)

dans laquelle $R^1$, $R^2$, $R^3$ et $R^4$ ont les significations indiquées ci-dessus, et

X représente un atome d'oxygène ou un radical $-N'R^6$ dans lequel $R^6$ représente un atome d'hydrogène, un alkyle en $C_1$–$C_{18}$ ou un radical de formule (IV), et – dans la formule (II):

$R^7$ représente l'hydrogène ou un radical de formule $-COOR^{10}$ dans lequel

$R^{10}$ représente un alkyle en $C_1$–$C_{18}$,

$R^8$ représente un atome d'hydrogène ou un radical méthyle, et

$R^9$ représente l'hydrogène, un alkyle en $C_1$–$C_{36}$, un phényle, le chlore, un acétyle, un radical de formule $-OR^{11}$ dans lequel $R^{11}$ représente l'hydrogène ou un alkyle en $C_1$–$C_{18}$, ou un radical de formule $-COOR^{12}$ dans lequel $R^{12}$ représente un alkyle ou un hydroxyalkyle contenant de 1 à 18 atomes de carbone ou un radical de formule (IV).

2. Procédé de préparation de copolymères selon la revendication 1, procédé caractérisé en ce que: ou bien:

a) on copolymérise l'un avec l'autre, à une température de 50 à 180° C, un monomère ou un mélange de monomères de formule (I) et une quantité au moins équimolaire d'un comonomère ou d'un mélange de comonomères de formule (II), dans un solvant organique ou dans l'eau, en présence de 0,01 à 15% en poids d'un amorceur ionique ou d'un amorceur radicalaire usuel et de 0 à 6% en poids d'un émulsionnant (à chaque fois par rapport à la quantité totale des monomères), en opérant, dans le cas d'un comonomère gazeux, sous une pression de 20 à 300 bar, ou bien:

b) on copolymérise d'abord un fumarate d'alkyle inférieur ou un maléate d'alkyle inférieur ou l'anhydride maléïque dans les conditions indiquées sous a) avec la quantité équivalente d'un ou de plusieurs monomères de formule (II), après quoi on fait réagir le copolymère obtenu avec un composé polyalkyl-pipéridinique répondant à la formule (VI):

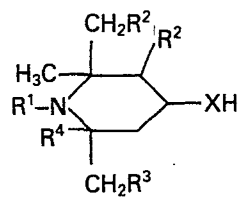
(VI)

dans laquelle $R^1$, $R^2$, $R^3$, $R^4$ et X ont les significations données à la revendication 1, cela en chauffant dans un solvant inerte à une température de 50 à 150° C lorsqu'on utilise un copolymère de l'anhydride maléïque et à une température de 80 à 250° C, en présence d'un catalyseur de transestérification, lorsqu'on utilise un copolymère d'ester fumarique ou maléïque, et, dans le cas où $R^5$ doit désigner un alkyle en $C_1$–$C_{18}$, l'alcool correspondant ou l'amine correspondante devant être ajouté en la quantité équimolaire par rapport au composé polyalkyl-pipéridinique.

3. Application des polymères selon la revendication 1, pour la stabilisation de polymères synthétiques contre l'action destructrice de la lumière.

4. Application selon la revendication 3, caractérisée en ce que le polymère est une polyoléfine.

5. Application selon la revendication 3, caractérisée en ce que le polymère est un polymère halogéné.

6. Application selon la revendication 3, caractérisée en ce que le polymère est un polyacrylate ou un polyméthacrylate.

7. Application selon la revendication 3, caractérisée en ce que le polymère est un homopolymère ou un copolymère du styrène.

8. Procédé pour stabiliser des polymères synthétiques contre l'action destructrice de la lumière, procédé caractérisé en ce qu'on ajoute au polymère, éventuellement en plus de composés à action stabilisante connus, de 0,01 à 5 parties en poids, par rapport au polymère, d'un stabilisant polymère selon la revendication 1.

9. Polymères synthétiques stabilisés contre la décomposition par les ultra-violets, polymères qui contiennent de 0,01 à 5 parties en poids, par rapport au polymère, d'un stabilisant polymère selon la revendication 1.